# EUROPEAN PATENT APPLICATION

(11) **EP 1 254 757 A1**
(43) Date of publication of application: **06.11.2002**
(21) Application number: 02007710.3
(22) Date of filing: 05.04.2002
(51) Int. Cl.: B29C 47/90

(54) **Guide roller for extrusion calibrators of tubular plastic films**

(30) Priority: 30.04.2001 IT MI010897
(71) Applicant: Pontarolo, Odino, 21052 Busto Arsizio (Varese) (IT)
(72) Inventor: Pontarolo, Odino, 21052 Busto Arsizio (Varese) (IT)
(74) Representative: Lecce, Giovanni

(57) **Abstract**

A roller guide (9) for extrusion calibrators (1) of tubular plastic films (7), provided with a surface, removable and interchangeable sleeve (10) made from materials having high thermal insulation characteristics and a good surface friction (grip) coefficient. Such characteristics allow a regular flow of the film being extruded (7) and a uniform cooling thermal dispersion throughout the surface development of said films.

## Description

The present invention relates to a guide roller for extrusion calibrators of tubular plastic films.

More particularly, the present invention relates to a guide roller for extrusion calibrators of tubular plastic films that allows to obtain a regular flowing of extrusion films and a uniform cooling thermal dispersion throughout the surface development of said films.

### Prior art

As is known the present extrusion calibrators of tubular plastic films are constituted by substantially polygonal tubular baskets, comprising a plurality of spaced and superposed planes, wherein a plurality of profiled levers is located, in tangential alignment. The levers which have the fulcrum at their rear end or are provided with radial sliding means, are associated to peripheral interconnected and motor-driven means which can move them simultaneously, orienting them with each other on each plane and for each plane, in opening and/or closing. Such interconnected and motor-driven means allow to orient levers tangentially, according to substantially circular, coaxial forms, to constitute the guide channels of the almost cylindrical tubular films of the desired diameter. Profiled levers are provided at present with sets of sequential idle rollers, approached to each other, from self-lubricating materials such as Nylon, Teflon and the like, whose function is to drive and accompany, with a rotary. motion and without dragging, the tubular plastic films during their internal air pressure extrusion translation.

Although the aforesaid realization is reasonably valid for the extrusion of tubular plastic films of a given consistence and thickness, without special quality requirements, it is poorly valid for the extrusion of very thin tubular films. In fact, for such films, quality requirements are more specific, with extremely more limited tolerances from the point of view of both thickness uniformity and product homogeneity. For such specific applications, the sequential idle rollers, located on the profiled front part of all levers, are no longer able to carry out their rolling sliding guide function. Dust, even minimal, present in the extrusion environment, which insinuates between the approached rollers, and the lightness of the thin film which cannot produce with its flowing the necessary friction that causes the rolling of rollers, prevent said rollers from rotating in a regular manner. Rollers may even stop and drag on said films, which leads to the exercise of tensions that, even though they may not produce lacerations, cause at least local non-uniformities in thickness.

Another drawback arises from the fact that, even in the hypothesis of a correct accompanying guide with a drag-free rotary motion, the present rollers are not sufficiently insulating and draw heat from the plastic films being extruded, causing an accelerated local cooling only along the contact strips, while the intermediate zones, which do not come in touch with rollers, cool more slowly. Because of this non uniform cooling, tubular films having a thin thickness are substantially longitudinally striated, with discontinuous transparency and thickness, of poor quality and unsuitable for the aims which said films are intended for.

### SUMMARY OF THE INVENTION

Object of the present invention is to eliminate the aforesaid drawbacks.

More particularly, object of the present invention is to provide a guide roller for extrusion calibrators of tubular plastic films such as to ensure both the flow of the tubular plastic films being extruded and a uniform cooling of said film throughout their surface development.

According to the present invention, these and other aims which will be clearer thanks to the following description are achieved by using a guide roller for extrusion calibrators of tubular plastic films, provided with a surface sleeve, movable and interchangeable, realized from a material having high characteristics of thermal insulation and a good surface friction (grip) coefficient, such as to ensure both the correct coupling of touch and rotary motion accompanying of the tubular plastic films being extruded and a uniform thermal cooling dispersion throughout the whole surface development of said plastic films being extruded.

Preferably, the sleeve material has a surface friction coefficient comprised between 0.38 and 0.45, and a thermal conductivity coefficient comprised between 0.03 and 0.06 W/m°C). The materials having a friction coefficient of about 0,40 and a thermal conductivity of about 0.05 W/m°C are particularly preferred.

Preferably, the sleeve is located in the central part of the guide roll and may cover either in part or entirely the surface of said roller, according to the diameter of the tubular film.

In order to facilitate the operations of connecting and/or disconnecting the sleeve which is tightly fitted on the roller to ensure the sliding guide action, the front part free from rollers may be shaped as a conic stress raiser or a seat, wherein a conic collector temporary couples.

The guide roller of the present invention may have a diameter and an extension even greater than those of traditional rollers.

Any material having high characteristics of thermal insulation and a good surface friction (grip) coefficient may be used to realize the sleeve that covers the guide roller of the present invention. The material may be selected according to the specific production needs and the characteristics required for the tubular plastic films to be produced. Examples of insulating materials that can be utilized for this purpose include: wool, felt, felt-wool, natural or synthetic rubber, expanded materials, polyurethane, polyesters and the like.

The advantages achieved with the use of the guide rollers of the present invention lie essentially in that they are extended and continuous and have no intermediate zones wherein dust may hide, causing seizing and/or dragging on tubular plastic film being extruded. Besides, the high insulation material or materials which roller's surface sleeves are made from ensure a regular and uniform cooling of the tubular plastic films being extruded .

A further advantage of the removable and interchangeable sleeves lies in that they allow to program in a simple, quick and economic manner the replacement operation for cleaning and/or washing, limiting dead times in production cycles.

### BRIEF DESCRIPTION OF THE DRAWINGS

The constructive and functional characteristics of the guide roller of the present invention will be better understood thanks to the following description, wherein reference is made to the figures of the attached drawings that represent an embodiment solely reported by way of illustrative non limiting example, and wherein:

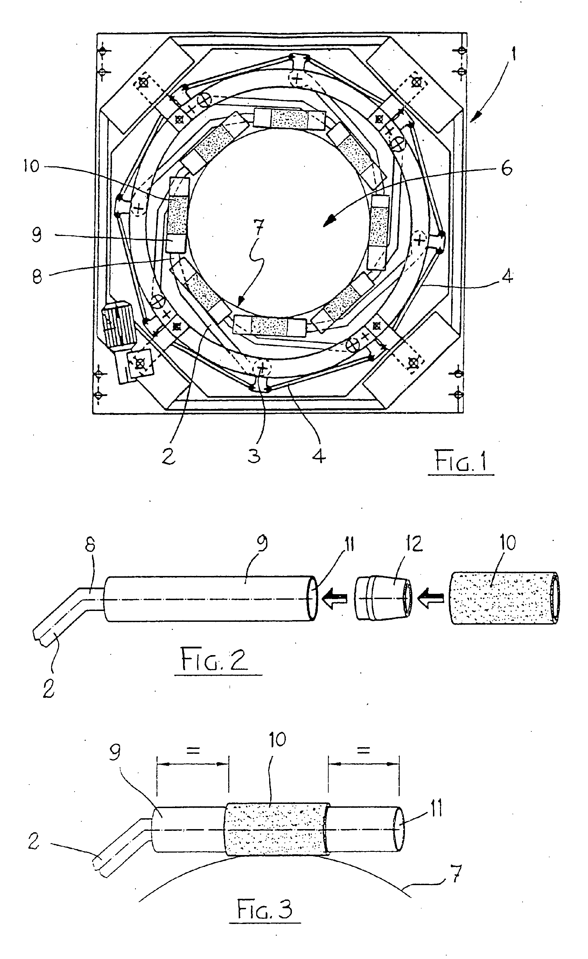

Figure 1 shows the schematic plan view of an extrusion calibrator of plastic films, provided with guide rollers according to the present invention, with a movement of the tangential type,
Figure 2 shows the schematic prospective front view of a roller according to the present invention, in the application step of the friction insulating tubular sleeve, and
Figure 3 shows the schematic front view of the roller of Figure 2, with the friction insulating tubular sleeve mounted.

### DESCRIPTION OF PREFERRED EMBODIMENTS

With reference to the figures, the extrusion calibrating basket 1 for tubular plastic films 7 has a substantially polygonal form and comprises a plurality of tangentially oriented levers 2 and, in the specific case illustrated by way of non limiting example, engaged with rear fulcra 3 associated to specific means 4 interconnected with each other and connected with a common motor-driving means. The same plurality of levers 2 may anyhow be interconnected with each other and connected with motor-driving means through traditional peripheral means of the radial type. In any case, the plurality of levers 2 is arranged on several spaced and superposed planes, so as to constitute, as a whole, a channel 6 through which the tubular film 7 passes during the extrusion. The common motor-driving can move simultaneously all levers 2, orienting them to each other, on each plane and for each plane, in opening and/or closing, so as to arrange tangentially their front ends 8 according to substantially circular, coaxial forms that constitute the aforesaid guide channel 6, almost cylindrical and of the diameter desired.

At the front end 8 of each lever 2 there is idly and removably coupled a roller 9, borne for instance by minimum friction rolling bearings, or the like, not shown. On each roller a surface, a removable and interchangeable sleeve (10), is fitted on, made from a material having high characteristics of thermal insulation and a good surface friction (grip) coefficient.

Preferably, the materials used for the sleeves have a surface friction coefficient comprised between 0.38 and 0.45, a thermal conductivity coefficient comprised between 0.03 and 0.06 W/m°C. The materials having a friction coefficient of about 0.40 and a thermal conductivity friction of about 0.05 W/m°C are particularly preferred.

The free front part of each idle roller 9 is realized either with a conic stress raiser or a seat 11, wherein a conic collector 12 temporary couples. In each case, such conic part has the function of facilitating the connection and/or disconnection of sleeves 10, that must be tightly fitted on, to ensure their action of sliding guide of the tubular film 7 to be extruded.

Sleeves 10 are preferably located in the central part of rollers 9, with a partial or total cover thereof, depending on the diameter of the tubular film 7 to be extruded.

As has been already mentioned, the materials suitable for the constitution of sleeves 10 have preferably a surface friction coefficient comprised between 0.38 and 0.45, a coefficient of thermal conductivity comprised between 0.03 and 0.06 W/m °C. Examples of such materials include wool, felt, felt-wool, natural or synthetic rubber, expanded materials, polyurethane, polyesters, and in any case materials having high thermal insulation characteristics and a sufficient surface friction (grip), according to the specific production needs and the characteristics required for the plastic films to be produced. They must also be easily removable and insertable, to ensure quick maintenance, cleaning and/or operations.

Although the invention has been described in conjunction with specific embodiments, offered for illustrative purpose only, it is evident that many alternatives and variations will be apparent to those skilled in the art, in the light of the foregoing description.

Accordingly, the invention is intended to embrace all of the alternatives and variations that fall within the spirit and scope of the appended claims.

## Claims

1. A roller guide for extrusion calibrators of tubular plastic films, said calibrators being constituted by tubular baskets (1) comprising a plurality of levers (2) located on spaced and superposed planes, interconnected with each other, and connected with motor-driven means to constitute the guide channel (6) of a tubular film (7) during the extrusion, **characterized in that** said roller (9) is provided with a removable and interchangeable surface sleeve (10), made from a material having high thermal insulation characteristics and a good surface friction (grip) coefficient, so as to ensure both the correct contact and rotary movement accompanying of the tubular plastic films to be extruded, and a uniform cooling thermal dispersion throughout the surface development of said plastic films being extruded.

2. The guide roller according to claim 1, **characterized in that** the material of sleeve (10) has a surface friction coefficient comprised between 0.38 and 0.45 and a thermal conductivity coefficient comprised between 0.03 and 0.06 W/ m°C.

3. The guide roller according to claims 1 or 2, **characterized in that** the material of sleeve (10) has a surface friction coefficient of about 0.42 and a thermal conductivity coefficient of about 0.05 W/m°C.

4. The guide roller according to any of the preceding claims, **characterized in that** it is keyed on the front end (8) of each lever (2) and **in that** said levers (2) are so moved as to have their front ends (8) tangentially arranged according to circular forms to constitute the guide channel (6) of the film.

5. The guide roller according to claim 4, **characterized in that** it is idly coupled with the front end (8) of each lever (2) by means of minimum friction rolling bearings.

6. The guide roller according to any of the preceding claims,
**characterized in that** sleeve (10) is tightly fitted on each roller (9) depending on its sliding guide action of the tubular film (7).

7. The guide roller according to any of the preceding claims, **characterized in that** its free front part is provided with a conic stress raiser.

8. The guide roller according to any of claims 1-6, **characterized in that** the free front part of said roller (9) comprises a seat (11) wherein a stress raiser conic collector (12) can be coupled.

9. The guide roller according to any of the preceding claims, **characterized in that** sleeve (10) is located in the central part of said roller (9).

10. The guide roller according to any of the preceding claims, **characterized in that** sleeve (10) partly covers the surface of said roller (9).

11. The guide roller according to any of the preceding claims 1-9, **characterized in that** sleeve (10) entirely covers the surface of said roller (9).

12. The guide roller according to any of claims 1-7, **characterized in that** the material having high thermal insulation characteristics and a good surface friction (grip) coefficient is selected from among wool, felt, felt-wool, natural or synthetic rubber, expanded materials, polyurethane and polyesters.
